# EUROPEAN PATENT APPLICATION

(11) **EP 1 205 866 A1**
(43) Date of publication of application: **15.05.2002**
(21) Application number: 01307915.7
(22) Date of filing: 18.09.2001
(51) Int. Cl.: G06F 17/60

(54) **Disseminating consumer information**

(30) Priority: 09.11.2000 GB 0027330
(71) Applicant: NCR INTERNATIONAL INC., Dayton, Ohio 45479 (US)
(72) Inventor: Mackay, Robin, London E14 6PA (GB)
(74) Representative: Williamson, Brian

(57) **Abstract**

Methods and related systems are disclosed for sharing consumer information between consumers via a communications network that comprises a data store accessible by a plurality of terminals each associated with a respective consumer. One such method comprises a providing consumer entering information about a product into their terminal and uploading that information to the data store; classifying the entered information into channels, each channel relating to a particular consumer issue about said product; storing the classified information; and storing a profile of a requesting consumer that identifies the channels corresponding to consumer issues of interest to the requesting consumer. When the requesting consumer enters a request for information about said product into their terminal, information is downloaded to the requesting consumer's terminal if that information relates to said product and was classified into any of the channels defined by the requesting consumer's profile.

## Description

This invention relates to techniques for disseminating information to and between consumers for their use in making purchase decisions.

Every day, in countless situations, consumers face choices about whether or not to buy products or services that they want or need. Unless they have personal experience of the products, services or suppliers between which they are choosing, in terms of characteristics such as the quality and provenance of those products, services or suppliers, consumers need information in order to make an informed choice. The need for high-quality information increases with the value and importance of the purchase, and with the consumer's unfamiliarity with the products, services or suppliers in question.

Unfortunately, as many consumers know to their cost, suppliers are rarely a source of the good-quality, impartial information that a consumer needs. At best, suppliers tend to say nothing about less favourable characteristics of their products and services; at worst, suppliers make unproven and even exaggerated assertions about their products and services or those of others.

It has long been accepted that a consumer's best source of information about a product, service or brand is other consumers' experience of that product, service or brand. The body of consumer opinion represents an impartial knowledge base whose statistical value reflects the potentially large number of experienced consumers and whose accuracy reflects the real-world experiences of those consumers.

In years past, there was too little consumer information to be of much use, ranging from word-of-mouth personal opinions up to occasional consumer surveys and related magazines and broadcasts. Such consumer information as existed was difficult, expensive and slow to find, and often of low quality in the sense of being relevant to the consumer's changing needs.

With the growth of the Internet, the volume of consumer information has developed explosively to the present situation in which there is too much information for a consumer readily to access, use or comprehend. Now, with the advent of on-line clubs, chat rooms and so on, consumers can face a daunting flood of information in response to even the most specific query about the characteristics of a product, service or brand. Whilst the quantity of that information is high, the quality of that information tends to be low, serving to confuse rather than enlighten the consumer. Specifically, the information tends not to follow any consistent format and contains much that is irrelevant. This places a burden upon the consumer to filter and interpret the information, slows the purchasing decision and obscures the key information that the consumer wants to see. Consequently, the Internet has shifted the consumer information problem to one of accessing high-quality information, quickly.

Another problem relates to the consumer's means for accessing the Internet, specifically the terminal that runs the consumer's browser software. Some large purchases such as a new car might justify lengthy research on a fixed terminal such as the consumer's home PC, because the buying process is usually spread over a lengthy period. The same does not apply to smaller, relatively routine purchases such as fast-moving consumer goods, where the buying process is often relatively short so that the purchasing decision is reached quickly. The aim in this respect is for the consumer to receive highly-focused consumer information in real time during the buying process so as to inform the purchasing decision.

Of course, it often happens that the consumer is in a store, shopping mall or showroom when reaching a purchase decision and hence away from their fixed Internet-access terminal. In those circumstances, the ideal is for the information to be presented to a mobile terminal carried by the consumer, such as a WAP-enabled mobile telephone. This presents another challenge, which is that the limited display, navigation and interface facilities of such terminals further emphasise the need for the information to be relevant and concise. There is no point in the consumer receiving real-time information that he or she cannot read, understand or use during the buying process.

This invention contemplates systems and methods that allow consumers to share consumer information and to access it easily using any terminal, including a wireless communication device embodying a mobile Internet-access terminal, such as a WAP-enabled mobile telephone.

The invention can be expressed on various levels within the same inventive concept. On a system-wide level, the invention resides in a method of sharing consumer information between consumers via a communications network that comprises a data store accessible by a plurality of terminals each associated with a respective consumer, the method comprising: a providing consumer entering information about a product, service or supplier into their terminal and uploading that information to the data store; classifying the entered information into channels, each channel relating to a particular consumer issue about said product, service or supplier; storing the classified information; and storing a profile of a requesting consumer that identifies the channels corresponding to consumer issues of interest to the requesting consumer; wherein the requesting consumer enters a request for information about said product, service or supplier into their terminal; and in response to said request, information is downloaded to the requesting consumer if that information relates to said product, service or supplier and was classified into any of the channels defined by the requesting consumer's profile.

On the same level, the invention resides in a system for sharing consumer information between consumers, the system comprising: a communications network accessible by first and second terminals each associated with a respective consumer, such that a providing consumer can enter information about a product, service or supplier into a first terminal and upload that information to the network; means for classifying the entered information into channels, each channel relating to a particular consumer issue about said product, service or supplier; a data store being part of the network for storing the classified information; a second terminal for the requesting consumer to enter a request for information about said product, service or supplier; means responsive to said request to recognise the requesting consumer and to recall a profile that identifies the channels corresponding to consumer issues of interest to the requesting consumer; and a filter responsive to the requesting consumer's profile, the filter being set to permit download of information to the requesting consumer if that information relates to said product, service or supplier and was classified into any of the channels defined by the requesting consumer's profile.

From a requesting consumer's perspective, a method of sharing consumer information between consumers via a communications network comprises a data store accessible by a plurality of terminals each associated with a respective consumer, the method comprising the requesting consumer entering into their terminal a request for information about a product, service or supplier and uploading that request to the network; identifying the requesting consumer and recalling a stored profile that identifies channels corresponding to consumer issues of interest to the requesting consumer; retrieving from the data store classified information about said product, service or supplier uploaded by a providing consumer to the data store; and downloading said classified information to the requesting consumer if that information relates to said product, service or supplier and was classified into any of the channels defined by a stored profile that identifies channels corresponding to consumer issues of interest to the requesting consumer.

The corresponding system comprises: a terminal usable by a requesting consumer to request information about a product, service or supplier, to upload that request to a communications network and to download the requested information from the communications network; means responsive to said request to recognise the requesting consumer and to retrieve from a data store classified information about said product, service or supplier uploaded by a providing consumer to the data store; and a filter responsive to a stored profile that identifies channels corresponding to consumer issues of interest to the requesting consumer, the filter being set to permit download of information to the requesting consumer if that information relates to said product, service or supplier and was classified into any of the channels defined by the requesting consumer's profile.

A requesting consumer's profile may be stored on the network and retrieved from storage in response to said request for information, or may be stored on the requesting consumer's terminal and uploaded with a request for information. The invention may involve providing to the requesting consumer a list of channels defined by the requesting consumer's profile that contain information on the product, service or supplier specified by the requesting user. In that case, the requesting user can choose among the available channels before displaying the information on their terminal.

From a providing consumer's perspective, the method of sharing consumer information comprises the providing consumer entering information about a product, service or supplier into their terminal for uploading to the data store and classifying the information into channels in accordance with consumer issues of potential interest to a requesting consumer. Preferably, the providing user is presented with a selection of available channels in accordance with the identity of the product, service or supplier to which the information relates. The corresponding system comprises: a terminal usable by a providing consumer to enter information about a product, service or supplier for uploading to a communications network; and means for classifying the information into channels in accordance with consumer issues of potential interest to a requesting consumer. Advantageously, the system also includes means responsive to the identity of the product, service or supplier to present the providing user with a selection of available channels in accordance with the product, service or supplier to which the information relates.

The providing consumer or their terminal can classify the entered information into channels. More specifically, the providing consumer can specify the channel(s) into which information is to be input, and can input information into the or each specified channel.

From the system provider's perspective, the invention resides in a method of sharing consumer information between consumers via a communications network that comprises a data store accessible by a plurality of terminals each associated with a respective consumer, such that a providing consumer can enter information about a product, service or supplier into a first terminal and upload that information to the data store, and a requesting consumer can enter a request for information about said product, service or supplier and download that information from the data store, wherein the method comprises: storing the uploaded information classified into channels, each channel relating to a particular consumer issue about said product, service or supplier; in response to a request for information, identifying the requesting consumer and recalling a profile that identifies the channels corresponding to consumer issues of interest to the requesting consumer; and downloading said classified information to the requesting consumer if that information relates to said product, service or supplier and was classified into any of the channels defined by the profile.

The corresponding communications system comprises: a data store for storing the uploaded information classified into channels, each channel relating to a particular consumer issue about said product, service or supplier; means responsive to a request for information to recognise the requesting consumer and to recall a profile that identifies the channels corresponding to consumer issues of interest to the requesting consumer; and a filter responsive to the requesting consumer's profile, the filter being set to permit download of information to the requesting consumer if that information relates to said product, service or supplier and was classified into any of the channels defined by the requesting consumer's profile.

The invention can involve entering a unique alphanumeric identifier (or scanning a uniquely coded identifier such as a barcode) associated with the product, service or supplier into the providing consumer's terminal or the requesting consumer's terminal to identify the product, service or supplier the subject of the providing consumer's information or the requesting consumer's request.

The requesting consumer can bookmark the product, service or supplier and subsequently download information on the bookmarked product, service or supplier. Information may be downloaded to a different terminal to that into which the requesting user entered the request for information or the bookmark.

The facility of the invention for classifying, tailoring and filtering data lends itself particularly well to the limited display, interface and navigation facilities of mobile terminals, exemplified by WAP-enabled mobile telephones. However, the invention can employ fixed terminals such as home PCs running web browsers like Netscape or Microsoft Internet Explorer (trade marks), or indeed mobile terminals capable of running such browsers. In general, the invention encompasses a terminal programmed to participate in the system or method of the invention.

In order that this invention can be more readily understood, reference will now be made, by way of example, to the accompanying drawings in which:
Figure 1 is a block diagram of a communications network such as the Internet, embodying a client-server architecture and having two user terminals as clients to a server;
Figure 2 is a flow diagram of a first embodiment of the invention, involving use of a web browser running on a fixed or mobile terminal; and
Figure 3 is a flow diagram of a second embodiment of the invention, involving use of a WAP-enabled mobile telephone.

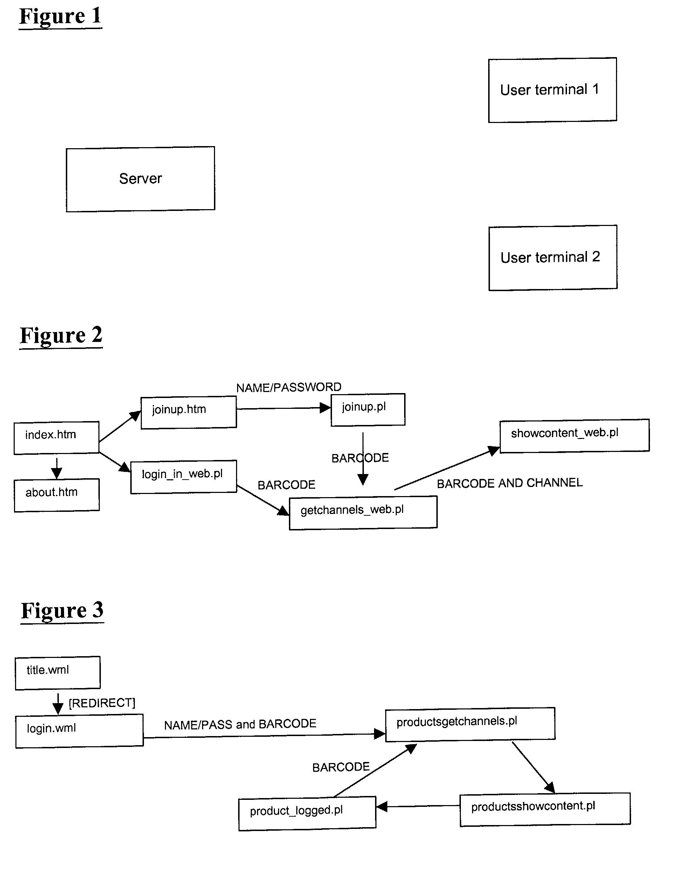

The embodiments illustrated in Figures 2 and 3 have many features in common, which will be described first with reference to Figure 1. For example, both embodiments run on a server 10 being part of a client-server communications network such as the Internet 12, which server has a data storage facility 14 and runs a program to receive, store and provide access to consumer information as will be described. Data in the storage facility is segmented or classified into channels. The program running on the server receives data input by a first consumer into their user terminal 16, stores in the data storage facility 14 data segmented by the user terminal 16, extracts the segmented data from storage and presents that data to a second consumer's user terminal 18 in a manner matching the second user's needs.

Each channel relates to a particular concern that consumers may have about a product, service or supplier. Examples of such concerns are environmental issues, dietary issues and suitability for children, commonly applicable to foodstuffs. Other types of products may, of course, give rise to different concerns, such as durability for clothing or reliability and energy consumption for electrical appliances.

The data is received by the server 10 and segmented by the server 10 or by a user terminal 16 in a data collection process in which a consumer enters information relating to a certain channel and a certain product, service or supplier using a terminal connected to the server via the communications network.

In the data collection process of the invention, the consumer identifies the product, service or supplier to the server by transmitting information that uniquely identifies that product, service or supplier. This may be a text description such as a name, which name is preferably a trade mark in view of its presumed distinctiveness, but in the case of a product, the unique identifying information could be the number corresponding to the product's barcode that is displayed on the product packaging alongside the barcode, or even (if the consumer has a barcode-reading device) the barcode data itself. The server 10 can store, look-up and correlate different expressions of identity, such as a name, barcode number and barcode data, to ensure that the product, service or supplier is uniquely labelled and correctly identified.

The data collection process continues by the consumer specifying the channel(s) into which they wish to input information. The number and type of available channels will vary in accordance with the product, service or supplier in question, and so will be presented to the consumer by the server 10 when the consumer has identified the product, service or supplier to the system. The consumer then inputs the relevant information into their choice of the available channels, either as a free text message or in specific fields in response to prompts from the system. For example, the terminal 16 may prompt the consumer to input information in a certain format, such as scores from 1 to 10 in terms of taste, freshness, price and other principal characteristics of a foodstuff.

The information entered into the system by a consumer may be reviewed by an administrator or moderator before being made available on the server 10 to other consumer, to filter out defamatory or irrelevant 'spam' comment, for example.

Using any suitable terminal 18, a consumer wishing to use the stored information may subscribe to certain channels corresponding to the issues of particular interest to them. In this way, the consumer can tailor the consumer information they receive by filtering-out information that is not of interest. For example, environmentalists may wish primarily to know about the environmental impact of any products they might consider buying, while other consumers might not care about the environment at all, or at least not as much as they care about the value for money or reliability of the products and service they purchase.

The data extraction process of the invention therefore starts with a consumer subscribing to the system with a view to receiving specific types of consumer information. That consumer sets up an account on the server by providing a unique username and password and by choosing the channels to which they wish to subscribe to receive the desired types of consumer information. The username, password and selection of channels collectively define a consumer's profile, which is then stored on the server 10.

Again using any suitable terminal 18, a subscribing consumer may then access information on a product, service or supplier of interest by presenting their name and password to the server 10 and by identifying the product, service or supplier to the server, for example by entering the barcode number or other product-identifying data of a product. In response, the server 10 provides a list of channels (i) to which the consumer is subscribed and (ii) which contain information on the product specified. The consumer can choose to read and note the information on each of these channels.

Figures 2 and 3 of the drawings illustrate two versions of the system of the invention, namely (in Figure 2) a web-based version with which the user interacts through a web browser and (in Figure 3) a wireless version with which the user interacts through a WAP mobile telephone. Of course, WAP mobile telephones are inherently mobile terminals whereas web browsers can be run by either fixed or mobile terminals. Accordingly, whilst the two illustrated embodiments show how the invention can be applied using different communications protocols, they are not intended to differentiate between fixed and mobile applications of the invention.

Referring specifically now to Figure 2 of the drawings, a web version of the invention employs HTML files whose characteristics are summarised in the table below:

| **Files** | **Description** |
|---|---|
| **about.htm** | An 'about' page that describes the system. |
| **index.htm** | The frontpage for the system ― asks the consumer to log in to the system or to join up if they are a new user. Calls **joinup.htm** or **log_in_web.pl** as appropriate. |
| **joinup.htm** | A 'join-up' page ― asks a new consumer to register with the service, and sends their name and password to the file **joinup.pl** |

The information processing files employed by the web version of the invention shown in Figure 1 are summarised in the following table:

| **Files** | **Description** |
|---|---|
| **joinup.pl** | Joins-up a consumer to the system by processing a new consumer's registration and setting up an account for them. Then displays a form or box to allow the consumer to search for information on products, services or suppliers (e.g. via barcode or text). Calls **getchannels_web.pl** |
| **log_in_web.pl** | A script to log-in a consumer and display the channels to which that consumer has subscribed. Also displays a form or box for the user to search for information on products, services or suppliers (e.g. via barcode or text). Calls **getchannels_web.pl** |
| **getchannels_web.pl** | Gets and displays the channels available for products, services or suppliers entered by the consumer. The consumer can then select the channel content of a given channel. Calls **showcontent_web.pl** |
| **showcontent_web.pl** | Gets and displays the channel content for a given product, service or supplier. Allows the consumer to look in other channels or to try other products, services or suppliers. |

The WAP version of the invention shown in Figure 2 of the drawings employs display files whose characteristics are summarised in the table below:

| **Files** | **Description** |
|---|---|
| **title.wml** | Frontpage for WAP site ― shows an appropriate image/logo to identify the system to the consumer and then after a few seconds redirects to **login.wml** |
| **login.wml** | Asks the consumer for a username and password and identifying information (e.g. a barcode or text) for a product, service or supplier. Calls **productsgetchannels.pl** |

The WAP version of the invention shown in Figure 2 also employs the information processing files summarised in the following table:

| **Files** | **Description** |
|---|---|
| **productsgetchannels.pl** | Gets and displays the channels available for the product, service or supplier that has been entered into the system, only showing the channels to which the consumer is subscribed. Calls **productsshowcontent.pl** |
| **productsshowcontent.pl** | Gets and displays the channel content for a given product, service or supplier as identified by text or a barcode, for example. Calls **product_logged.pl** if the consumer wishes to search for other products. |
| **product_logged.pl** | "search for another?" product .Calls **productsgetchannels.pl** |

Many variations are possible within the inventive concept. For example, by storing the time and date of any previous consumer access and the identity of the product, service or supplier that the consumer identified to the system on that occasion, the server can remember that a consumer has already seen certain information in certain channels about certain products, services or suppliers. So, if desired, the server can present only such new information as has been collected in those respects since the consumer last accessed the system.

Of course, unique identifiers other than names, numbers or barcodes will be evident to those skilled in the art, such as radio-frequency tags attached to a product that can be interrogated by suitable readers. It is also possible for an intangible service or supplier to be identified to the system by reading a unique identifier associated with a tangible representation of the service or supplier, such as a barcode or tag applied to a letter from a service provider.

Optionally, the requesting consumer's selection of channels for subscription can be varied in accordance with the nature of a product, service or supplier. Potentially, therefore, a set of different profiles can be stored for a given consumer and an appropriate profile can be recalled from that set to suit the product, service or supplier of interest to that consumer at the time of a particular information request. Also, whilst the preferred embodiments envisage storing the requesting consumer's profile at the server end and retrieving the requesting consumer's profile from storage for the purposes of filtering information, it is possible for the requesting consumer's profile to be stored at the client end in the requesting user's terminal and uploaded to the server when a request for related information is made to the server.

Whilst client-end segmentation of data is convenient and preferred, it is also possible for the server to segment incoming data for storage purposes. Also, the information does not necessarily have to be retrieved in a channel format: it could be retrieved in, for example, user defined directories.

Another possible option is for a user to enter an identifier such as a barcode or a description of a product into a terminal but not to receive the information there and then on that terminal; instead, the information can be received later, either on that terminal or on another terminal. By doing so, the user is effectively 'bookmarking' the product as interesting, so that the user can find out more information when they get home or when they have more time. The point is that some products require more research and information than can be conducted or reviewed when out shopping or indeed than can be displayed on some mobile terminals such as phone telephones. In that case, the user can access the system on another terminal with better display and interface capabilities, such as a home PC, and access more information via the bookmark. This is analogous to a user writing down the name of an interesting product on a piece of paper while out shopping and then finding out more information about that product, using a home PC for example, when they get home.

In view of these and other variants, reference should be made to the accompanying claims rather than the foregoing specific description in interpreting the scope of the invention.

## Claims

1. A method of sharing consumer information between consumers via a communications network that comprises a data store accessible by a plurality of terminals each associated with a respective consumer, the method comprising:
a providing consumer entering information about a product, service or supplier into their terminal and uploading that information to the data store;
classifying the entered information into channels, each channel relating to a particular consumer issue about said product, service or supplier;
storing the classified information; and
storing a profile of a requesting consumer that identifies the channels corresponding to consumer issues of interest to the requesting consumer;
wherein the requesting consumer enters a request for information about said product, service or supplier into their terminal; and in response to said request, information is downloaded to the requesting consumer if that information relates to said product, service or supplier and was classified into any of the channels defined by the requesting consumer's profile.

2. The method of Claim 1, wherein the requesting consumer's profile is stored on the network and is retrieved from storage in response to said request for information.

3. The method of Claim 1 or Claim 2, comprising providing to the requesting consumer a list of channels defined by the requesting consumer's profile that contain information on the product, service or supplier specified by the requesting user.

4. The method of Claim 3, wherein the requesting user chooses among the available channels before displaying the information on their terminal.

5. The method of any preceding Claim, wherein the providing consumer or their terminal classifies the entered information into channels.

6. The method of Claim 5, wherein the providing consumer specifies the channel(s) into which information is to be input, and inputs information into the or each specified channel.

7. A method of sharing consumer information between consumers via a communications network that comprises a data store accessible by a plurality of terminals each associated with a respective consumer, the method comprising a requesting consumer entering into their terminal a request for information about a product, service or supplier and uploading that request to the network; identifying the requesting consumer and recalling a stored profile that identifies channels corresponding to consumer issues of interest to the requesting consumer; retrieving from the data store classified information about said product, service or supplier uploaded by a providing consumer to the data store; and downloading said classified information to the requesting consumer if that information relates to said product, service or supplier and was classified into any of the channels defined by a stored profile that identifies channels corresponding to consumer issues of interest to the requesting consumer.

8. A method of sharing consumer information between consumers via a communications network that comprises a data store accessible by a plurality of terminals each associated with a respective consumer, the method comprising a providing consumer entering information about a product, service or supplier into their terminal for uploading to the data store and classifying the information into channels in accordance with consumer issues of potential interest to a requesting consumer.

9. The method of Claim 8, wherein the providing user is presented with a selection of available channels in accordance with the identity of the product, service or supplier to which the information relates.

10. A method of sharing consumer information between consumers via a communications network that comprises a data store accessible by a plurality of terminals each associated with a respective consumer, such that a providing consumer can enter information about a product, service or supplier into a first terminal and upload that information to the data store, and a requesting consumer can enter a request for information about said product, service or supplier and download that information from the data store, wherein the method comprises:
storing the uploaded information classified into channels, each channel relating to a particular consumer issue about said product, service or supplier;
in response to a request for information, identifying the requesting consumer and recalling a profile that identifies the channels corresponding to consumer issues of interest to the requesting consumer; and
downloading said classified information to the requesting consumer if that information relates to said product, service or supplier and was classified into any of the channels defined by the profile.

11. The method of any preceding Claim, comprising entering a unique alphanumeric identifier associated with the product, service or supplier into the providing consumer's terminal or the requesting consumer's terminal to identify the product, service or supplier the subject of the providing consumer's information or the requesting consumer's request.

12. The method of any preceding Claim, comprising scanning a uniquely coded identifier associated with the product, service or supplier to identify the product, service or supplier the subject of the providing consumer's information or the requesting consumer's request.

13. The method of any preceding Claim, wherein the requesting consumer bookmarks the product, service or supplier and wherein information on the bookmarked product, service or supplier is subsequently downloaded to the requesting consumer.

14. The method of any preceding Claim, wherein information is downloaded to a different terminal to that into which the requesting user entered the request for information.

15. A system for sharing consumer information between consumers, the system comprising:
a communications network accessible by first and second terminals each associated with a respective consumer, such that a providing consumer can enter information about a product, service or supplier into a first terminal and upload that information to the network;
means for classifying the entered information into channels, each channel relating to a particular consumer issue about said product, service or supplier;
a data store being part of the network for storing the classified information;
a second terminal for the requesting consumer to enter a request for information about said product, service or supplier;
means responsive to said request to recognise the requesting consumer and to recall a profile that identifies the channels corresponding to consumer issues of interest to the requesting consumer; and
a filter responsive to the requesting consumer's profile, the filter being set to permit download of information to the requesting consumer if that information relates to said product, service or supplier and was classified into any of the channels defined by the requesting consumer's profile.

16. A system for sharing consumer information between consumers, the system comprising:
a terminal usable by a requesting consumer to request information about a product, service or supplier, to upload that request to a communications network and to download the requested information from the communications network;
means responsive to said request to recognise the requesting consumer and to retrieve from a data store classified information about said product, service or supplier uploaded by a providing consumer to the data store; and
a filter responsive to a stored profile that identifies channels corresponding to consumer issues of interest to the requesting consumer, the filter being set to permit download of information to the requesting consumer if that information relates to said product, service or supplier and was classified into any of the channels defined by the requesting consumer's profile.

17. A system for sharing consumer information between consumers, the system comprising:
a terminal usable by a providing consumer to enter information about a product, service or supplier for uploading to a communications network; and
means for classifying the information into channels in accordance with consumer issues of potential interest to a requesting consumer.

18. The system of Claim 17, comprising means responsive to the identity of the product, service or supplier to present the providing user with a selection of available channels in accordance with the product, service or supplier to which the information relates.

19. A communications system for sharing consumer information between consumers, the system being accessible by first and second terminals each associated with a respective consumer, such that a providing consumer can enter information about a product, service or supplier into a first terminal and upload that information to the system, and a requesting consumer can enter a request for information about said product, service or supplier and download that information from the system, wherein the system comprises:
a data store for storing the uploaded information classified into channels, each channel relating to a particular consumer issue about said product, service or supplier;
means responsive to a request for information to recognise the requesting consumer and to recall a profile that identifies the channels corresponding to consumer issues of interest to the requesting consumer; and
a filter responsive to the requesting consumer's profile, the filter being set to permit download of information to the requesting consumer if that information relates to said product, service or supplier and was classified into any of the channels defined by the requesting consumer's profile.

20. The system of Claim 19, further comprising means for storing the requesting consumer's profile and retrieving the requesting consumer's profile from storage in response to said request for information.

21. The system of any of Claims 15 to 20, comprising means for entering a unique alphanumeric identifier associated with the product, service or supplier into the providing consumer's terminal or the requesting consumer's terminal to identify the product, service or supplier the subject of the providing consumer's information or the requesting consumer's request.

22. The system of any of Claims 15 to 21, comprising scanner means for scanning a uniquely coded identifier associated with the product, service or supplier to identify the product, service or supplier the subject of the providing consumer's information or the requesting consumer's request.

23. The system of Claim 22, wherein the uniquely coded identifier is a barcode or a RF tag.

24. A terminal programmed to participate in the system or method of any preceding claim.
